# FASCICULE DE BREVET EUROPEEN

(11) **EP 1 554 554 B1**
(45) Date de publication et mention de la délivrance du brevet: **21.02.2007**
(21) Numéro de dépôt: 03780280.8
(22) Date de dépôt: 26.09.2003
(51) Int. Cl.: G01L 9/00

(54) **CAPTEUR DE PRESSION A RESEAU DE BRAGG.**
DRUCKSENSOR MIT BRAGG GITTERN
BRAGG GRATING PRESSURE SENSOR

(30) Priorité: 30.09.2002 FR 0212062
(43) Date de publication de la demande: 20.07.2005
(73) Titulaire: COMMISSARIAT A L'ENERGIE ATOMIQUE, 75015 Paris (FR)
(72) Inventeur: BUGAUD, Michel, F-95100 ARGENTEUIL (FR)
(74) Mandataire: Poulin, Gérard
(86) Numéro de dépôt international: PCT/FR2003/050068
(87) Numéro de publication internationale: WO 2004/029570

(56) Documents cités:
- DE-C- 19 648 403
- US-B1- 6 278 811

## Description

### DOMAINE TECHNIQUE

La présente invention concerne un capteur de pression à réseau de Bragg ("Bragg grating").

Elle s'applique notamment au domaine de l'industrie chimique, pour la mesure de la pression de fluides, par exemple des hydrocarbures liquides.

### ETAT DE LA TECHNIQUE ANTERIEURE

On connaît déjà des capteurs de pression à réseau de Bragg par les documents suivants :
[1] EP 1 008 840A, "Optical pressure sensor and measuring device provided with such a pressure sensor", invention de M. Voet, M. Bugaud et P. Ferdinand
[2] Demande de brevet des Etats Unis 2 001 001 9103A, "Optical fiber sensor", invention de E. Sugai, K. Watabe, K. Yamaga et S. Fujita

Dans ces capteurs de pression connus, la fibre optique, dans laquelle est formé le réseau de Bragg, est susceptible de se déplacer latéralement, ce qui risque d'endommager cette fibre optique.

### EXPOSÉ DE L'INVENTION

La présente invention a pour but de remédier à l'inconvénient précédent.

DE 196 48 403 C divulgue un détecteur de pression et/ou de forces de tension et US 6 278 811 B divulgue un capteur de pression à réseau de Bragg dans une fibre optique.

De façon précise, la présente invention à pour objet un capteur de pression comprenant un guide d'onde optique, de préférence une fibre optique, et un premier élément réflecteur, de préférence un réseau de Bragg, formé dans une portion de ce guide d'onde optique, cette portion étant soumise à la pression, conformément à la revendication 1.

Afin d'éviter toute hystérésis dans la réponse du capteur, notamment au voisinage de la pression nulle, cette portion du guide d'onde optique (de préférence une fibre optique) est soumise à une légère précontrainte en compression.

Par légère précontrainte en compression, on entend une précontrainte en compression dont la valeur est faible devant l'étendue de mesure du capteur.

De préférence, les éléments élastiques sont des entretoises toriques élastiques.

De préférence, les éléments élastiques sont faits d'un matériau élastique à faible coefficient de frottement.

De préférence, ce matériau élastique est le polytétrafluoréthylène alvéolé.

Le capteur objet de l'invention peut comprendre en outre un deuxième élément réflecteur qui est différent du premier élément réflecteur et qui est prévu pour une mesure de température, ce deuxième élément réflecteur étant formé dans une portion du guide d'onde optique qui n'est pas soumise à la pression.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lequels :
- la figure 1A est une vue schématique et partielle d'un capteur de pression unidirectionnel à membrane, conforme à l'invention, comprenant plusieurs bagues,
- la figure 1B est une vue schématique et partielle d'une variante du capteur de la figure 1A, ne comprenant qu'une seule bague utile pour la compréhension de l'invention,
- la figure 2 est une vue schématique et partielle d'une autre variante du capteur représenté sur la figure 1A, utile pour la compréhension de l'invention et
- la figure 3 est une vue schématique d'un capteur de pression omnidirectionnel utile pour la compréhension de l'invention.

### EXPOSÉ DÉTAILLÉ DE MODES DE RÉALISATION PARTICULIERS

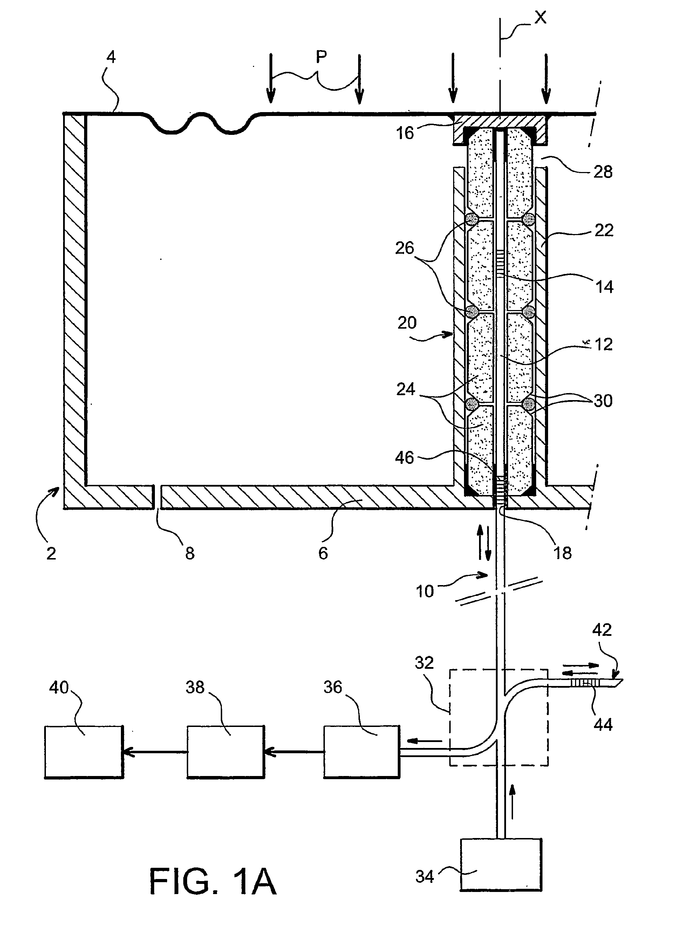

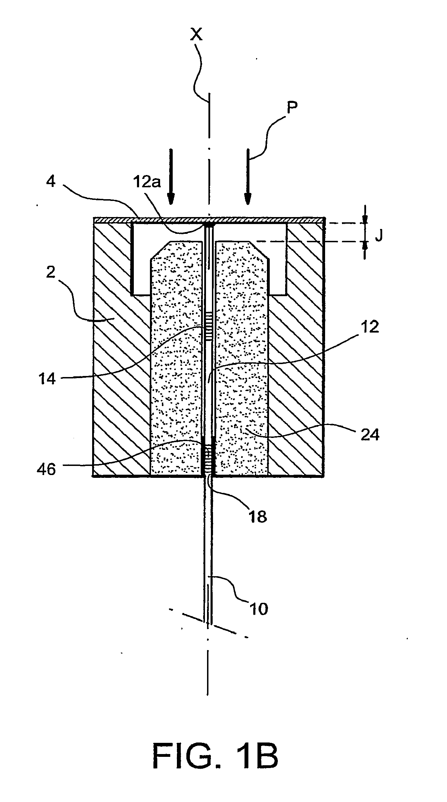

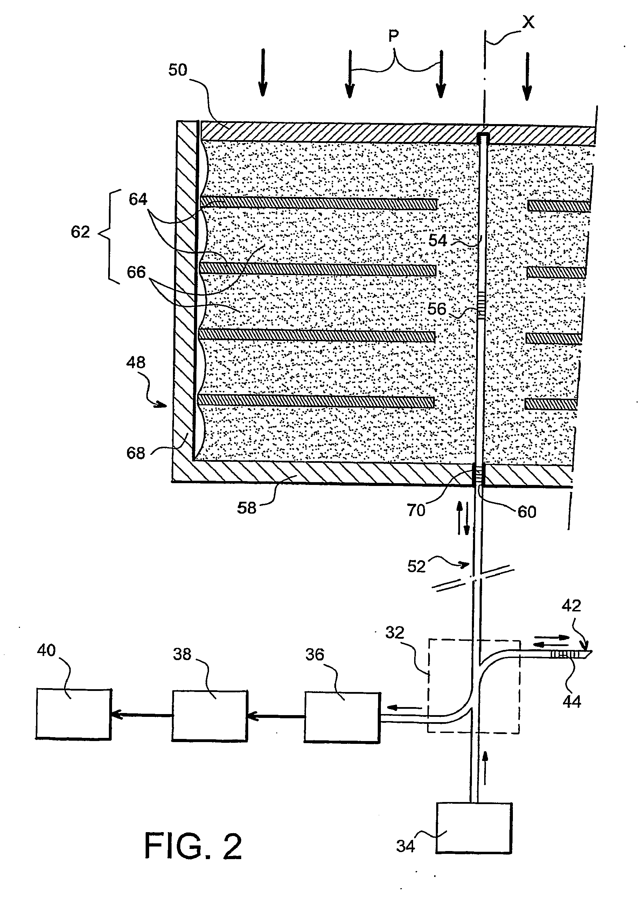

Les capteurs de pression qui sont schématiquement représentés sur les figures 1A, 1B et 2, sont des capteur unidirectionels à membrane : la mesure de pression y est effectuée de façon unidirectionnelle en mesurant la déformation d'une membrane.

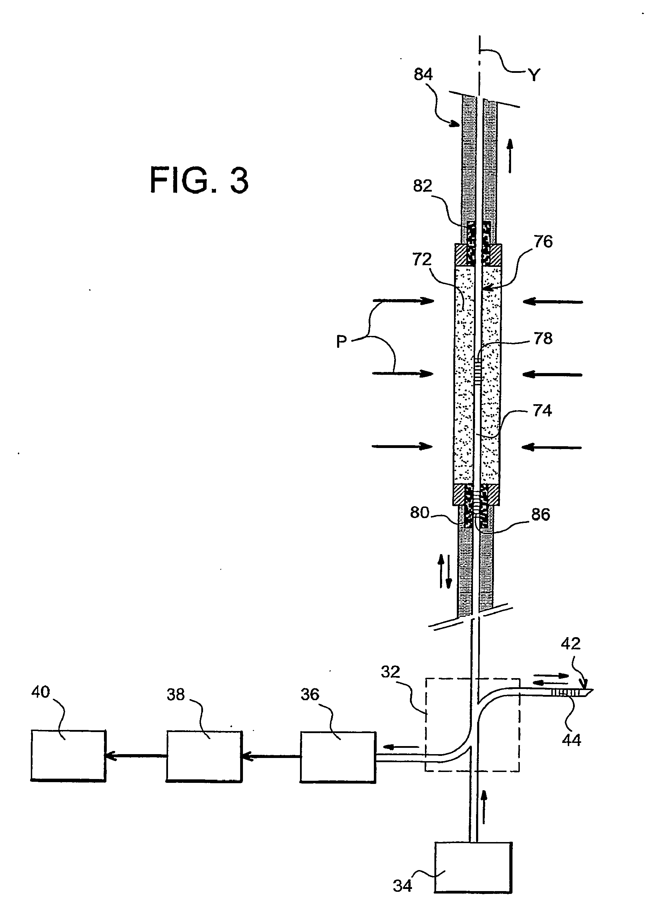

Le capteur de pression qui est schématiquement représenté sur la figure 3, est un capteur omnidirectionnel hydrostatique la mesure de pression y est effectuée de façon omnidirectionnelle en mesurant la déformation d'un volume de référence.

Considérons d'abord les capteurs unidirectionnels à membrane, conformes à l'invention. Dans ces capteurs, on utilise une fibre optique en compression. La résistance importante d'une fibre optique (en particulier d'une fibre optique en silice) à la compression garantit à ces capteurs une bonne fiabilité.

Dans les capteurs des figures 1A, 1B et 2 on utilise une membrane en tant que corps d'épreuve. La pression que l'on veut mesurer est appliquée à cette membrane. Sous l'effet de cette pression, la membrane se déplace et l'on mesure son déplacement grâce à un réseau de Bragg qui est formé dans une fibre optique.

Cette dernière, qui est solidaire de la membrane, est comprimée. Cette compression provoque un décalage de la longueur d'onde de Bragg du réseau. La mesure de ce décalage permet la mesure du déplacement de la membrane et donc la mesure de la pression.

Dans ces capteurs des figures 1A, 1B et 2, des moyens spécifiques sont prévus pour maintenir et guider la fibre optique tout en empêchant le flambage de cette dernière lors de sa mise en compression longitudinale. Ces moyens spécifiques sont réalisés de deux façon différentes dans les exemples des figures 1A, 1B et 2.

Plus précisément, le capteur de pression conforme à l'invention, qui est schématiquement représenté sur la figure 1A, comprend un boîtier 2 et une membrane déformable 4 qui ferme le boîtier 2 et sur laquelle s'applique la pression à mesurer P. Sous l'effet de cette pression P la membrane 4 se déforme suivant une direction X.

La paroi 6 du boîtier 2, qui se trouve en regard de la membrane 4, comporte une ouverture 8 lorsque le capteur est configuré pour la mesure de pressions relatives.

Le capteur comprend en outre une fibre optique 10 dont une portion 12 se trouve dans le boîtier 2. Un réseau de Bragg 14 est formé dans cette portion de fibre optique.

Le capteur comprend aussi une armature mobile 16 qui se trouve dans le boîtier et qui est fixée à la membrane 4, sensiblement au centre de cette membrane.

La portion 12 de fibre optique s'étend parallèlement à la direction X. Une extrémité de cette portion de fibre optique est clivée perpendiculairement à l'axe optique de cette portion et fixée à l'armature mobile 16. L'autre extrémité de cette portion 12 est fixée à la paroi 6 du boîtier.

Plus précisément, cette paroi 6 comprend un passage étanche 18 pour la fibre optique et la portion 12 de fibre optique est fixée à cette paroi 6, au niveau de ce passage étanche 18.

Dans le capteur de la figure 1A, les moyens 20 qui empêchent le flambage de la fibre optique (ou plus précisément de la portion 12 de la fibre optique) comprenne un tube de guidage 22, des bagues 24 et des éléments élastiques. Ces éléments sont des entretoises toriques 26 qui sont faites d'un matériau élastique à faible coefficient de frottement, de préférence le polytétrafluoréthylène alvéolé.

Le tube 22 se trouve dans le boîtier 2 et s'étend en suivant la direction X, autour de la portion 12 de la fibre optique. Une extrémité de ce tube est fixée à la paroi 6 et l'autre extrémité du tube 22 est séparée de l'armature mobile 16 par un espace 28.

Les bagues 24 sont placées les unes à la suite des autres dans le tube 22. Ces bagues entourent la portion 12 de fibre optique et sont espacées les unes des autres grâce aux entretoises toriques élastiques.

Dans l'exemple de la figure 1A, chaque entretoise torique permet l'espacement de deux bagues 24 adjacentes en s'appuyant sur deux chanfreins 30, à 45°, respectivement formés sur les extrémités de ces bagues qui sont en regard l'une de l'autre.

Ainsi la portion 12 de fibre optique est-elle guidée dans l'ensemble des bagues 24, ces dernières étant maintenues longitudinalement par le tube 22 qui limite le désaxement de ces bagues, par exemple à ± 0,5µm.

Le faible jeu axial et surtout longitudinal, qui est réparti de façon égale entre les bagues par l'ensemble des entretoises , ou joints, toriques élastiques 26, permet à la pression de comprimer longitudinalement la portion de fibre en évitant tout flambage de cette dernière.

De plus, les bagues 24 sont auto-alignées quel que soit le déplacement longitudinal imposé par la pression, en raison de l'action des entretoises toriques élastiques 26 s'appuyant symétriquement sur ces bagues.

En outre, ces entretoises, ou joints, toriques 26, dont la dureté est faible, n'induisent qu'une très faible résistance à la compression et n'augmentent que très faiblement l'inertie de l'équipage mobile qui est formé par la membrane 4, l'armature mobile 16 et la portion de fibre 12. Leur coefficient de frottement par rapport au tube 22 rend négligeable l'effet des frottements.

On optimise ainsi le comportement dynamique du capteur.

Il convient de noter que la bague la plus proche de l'armature mobile 16 peut être fixée à cette armature mobile et que la bague la plus proche de la paroi 6 du boîtier 2 peut être fixée à cette paroi, mais ce n'est pas obligatoire.

Afin d'éviter toute hystérésis dans la réponse du capteur, notamment au voisinage de la pression nulle, la portion de fibre 12 est soumise à une légère précontrainte en compression.

Il en est de même dans les exemples des figures 1B, 2 et 3.

Selon une variante schématiquement représentée sur la figure 1B (où les mêmes éléments ont les mêmes références), on ne conserve qu'une seule bague 24 qui est fixe et solidaire du boîtier 2 et qui guide la portion de fibre 12 sur toute la longueur du capteur.

Alors, il n'y a plus d'entretoise élastique. La sollicitation en compression de la portion de la fibre, lors de la sollicitation de la membrane, est autorisée par un jeu J situé entre le sommet de la bague 24 et la membrane déformable 4.

Dans un mode de fixation particulier, l'extrémité 12a de la portion de fibre 12 peut être métallisée et soudée ponctuellement à la membrane 4 mais elle peut aussi être fixée par tout autre moyen.

De même, au niveau du passage étanche inférieur 18, la portion de fibre 12 peut être fixée à la bague 24 ou au boîtier 2 par soudure ou brasure, si elle est localement métallisée, ou par tout autre moyen approprié (colle ou sertissage par exemple).

Pour mesurer le décalage de la longueur d'onde de Bragg du réseau 14 contenu dans la portion 12 de la fibre optique, on peut prévoir, à l'extérieur du boîtier 2, un coupleur optique 32 de type 2x2 et une source lumineuse 34 à large bande.

Deux voies ("ports") du coupleur sont respectivement reliées à la source lumineuse 34 et à l'extrémité de la fibre optique 10, qui se trouve à l'extérieur du boîtier 2, pour transmettre la lumière fournie par la source à cette fibre optique.

La lumière réfléchie par le réseau de Bragg 14 est transmise, par l'intermédiaire d'une autre voie du coupleur, à un analyseur de spectre 36 qui est lui-même relié à des moyens électroniques 38 de traitement des signaux fournis par cet analyseur.

Ces moyens 38 permettent de déterminer la pression P à partir des modifications de la lumière réfléchie par le réseau de Bragg, qui sont détectées par l'analyseur de spectre 36.

Les résultats des mesures sont fournis par des moyens d'affichage 40 qui sont reliés aux moyens électronique de traitement 38.

La quatrième voie du coupleur peut être inutilisée, et de préférence clivée en biais, ou être reliée à une fibre optique 42 dont l'extrémité est de préférence clivée en biais et dans laquelle est formé un réseau de Bragg de référence 44.

Ce réseau 44 reçoit alors la lumière émise par la source 34 et permet ainsi le calibrage du capteur de pression.

De préférence, on prévoit un autre réseau de Bragg 46 dans une portion de la fibre optique 10 qui n'est pas comprimée, par exemple au niveau du passage étanche 18 de la paroi 6 du boîtier 2, là où la portion 12 de fibre optique est fixée.

Il va de soi que, si la fixation est effectuée par sertissage, ce sertissage est préférentiellement effectué à un endroit de la fibre où il n'induit aucune contrainte sur le réseau de Bragg 46.

Un sertissage induit en effet un déplacement des raies spectrales, a priori stable et susceptible d'être compensé, mais qu'il est préférable d'éviter dans le cas d'un capteur.

L'analyseur de spectre optique 36 permet alors de mesurer la température grâce à cet autre réseau de Bragg 46 (qui est différent du réseau 14).

On peut ainsi compenser les modifications engendrées durant les mesures de pression et dues aux influences de la température sur le réseau de Bragg 14 qui est formé dans la portion 12 de fibre optique.

Le capteur qui est schématiquement représenté sur la figure 2, comprend encore un boîtier 48 et une membrane 50 qui ferme ce boîtier.

Dans l'exemple de la figure 2, cette membrane 50 est rigide et sa périphérie n'est pas fixée au boîtier 48 mais en est légèrement espacée, comme on le voit sur la figure 2.

On souhaite mesurer la pression P qui s'exerce sur cette membrane suivant une direction X.

Le capteur de pression de la figure 2 comprend encore une fibre optique 52 dont une portion 54 comporte un réseau de Bragg 56 destiné à mesurer la pression.

Cette portion 56 s'étend dans le boîtier 48 parallèlement à la direction X. Une extrémité de cette portion 56 de fibre optique est fixée à la membrane 50 tandis que l'autre extrémité de cette portion 56 est fixée à la paroi 58 du boîtier, qui est opposée à la membrane 50.

Plus précisément, la fibre optique 52 traverse cette paroi 58 par un passage étanche 60 prévu à cet effet dans la paroi et la portion de fibre optique est fixée à cette paroi 58 au niveau de ce passage étanche 60.

Dans l'exemple de la figure 2, les moyens 62 destinés à empêcher le flambage de la portion 54 de fibre optique comprennent des rondelles rigides 64 qui sont disposées dans le boîtier 48, parallèlement les unes aux autres et perpendiculairement à la direction X, et qui entourent la portion 54 de fibre optique. Ces rondelles sont espacées les unes des autres par des éléments élastiques 66.

Dans le capteur représenté sur la figure 2, ces éléments élastiques 66 ne forment qu'un seul bloc qui est fait d'un matériau élastomère, emprisonne la portion 54 de fibre optique et s'étend de la membrane 50 à la paroi 58 du boîtier, qui est opposée à cette membrane, comme on le voit sur la figure 2.

De même que cette membrane 50, les rondelles rigides 64 sont légèrement espacées de la paroi latérale 68 du boîtier, qui s'étend parallèlement à la direction X.

Lorsque la pression P est appliquée à la membrane 50, cette dernière et les rondelles 64 se déplacent donc suivant la direction X, en étant guidées par cette paroi latérale 68 du boîtier 48.

On précise que l'assemblage monobloc des éléments 66 peut être réalisé par moulage et injection d'un élastomère en une seule pièce qui intègre la portion de fibre 54.

De plus, les rondelles 64 sont usinées avec une précision de 0,5µm pour limiter le désaxement. Ces rondelles sont rendues solidaires de l'élastomère par adhésion lors du moulage; il en est de même pour la portion de fibre.

Pour mesurer la pression P au moyen du réseau de Bragg, on utilise encore la source lumineuse à large bande 34, couplée à la fibre optique 52 par l'intermédiaire du coupleur 32 de type 2x2, ainsi que l'analyseur de spectre 36, les moyens électroniques 38 de traitement des signaux fournis par cet analyseur 36 et les moyens d'affichage 40, dont il est question dans la description de la figure 1A, avec éventuellement la fibre optique 42 contenant le réseau de Bragg de référence 44.

On peut encore utiliser un autre réseau de Bragg 70 en vue d'une compensation de température. On forme encore ce réseau 70 dans la fibre optique 52, dans une portion de cette dernière qui n'est pas soumise à la pression P, par exemple dans le passage étanche 70, au niveau de la fixation de la portion 54 de la fibre optique S2.

Le capteur de pression qui est schématiquement représenté sur la figure 3, est un capteur omnidirectionnel hydrostatique qui est simple et peu coûteux.

Ce capteur comprend un élément élastique 72 qui est fait d'un matériau polymère et emprisonne une portion 74 d'une fibre optique 76.

Dans cette portion 74 est formé un réseau de Bragg 78 permettant la mesure-de la pression.

L'élément élastique 72 est compris entre deux embouts d'ancrage 80 et 82 qui délimitent la portion 74 de la fibre optique 76 et sont rigidement solidaires de cette fibre.

Ces embouts d'ancrage forment des butées rigides qui sont par exemple métalliques et, si l'on utilise une fibre possédant un revêtement métallique, peuvent être fixées à ce revêtement.

L'élément élastique 72 coopère avec les embouts 80 et 82 pour amplifier l'effet de la pression hydrostatique et convertir celle-ci en une déformation longitudinale de la portion de fibre 74 et donc du réseau de Bragg 78.

L'élément élastique 72 a la forme d'un cylindre de révolution autour de la portion 74 de fibre optique.

La pression P d'un milieu environnant s'exerce sur la périphérie de cet élément 72, perpendiculairement à l'axe Y de la portion 74 de fibre optique. La déformation de l'élément qui en résulte est transmise au réseau de Bragg 78 par l'intermédiaire de cet élément qui amplifie la pression hydrostatique subie par la fibre et donc par le réseau de Bragg.

L'épaisseur du revêtement que constitue cet élément est calculée en fonction de la rigidité du matériau polymère et du coefficient d'amplification souhaité.

Pour mesurer la pression P par l'intermédiaire de la déformation du réseau de Bragg, on utilise encore la source lumineuse à large bande 34 ainsi que le coupleur optique 32 de type 2x2 que l'on relie à une extrémité de la fibre optique 76 et que l'on connecte, comme précédemment, à l'analyseur de spectre 36, lui-même relié aux moyens électroniques de traitement 38 qui sont munis des moyens 40 d'affichage des résultats de la mesure.

Sur la figure 3, on voit que la fibre optique 76 et donc que le capteur de pression sont intégrés à un câble optique 84 et l'on voit que le coupleur optique 32 est relié à une extrémité de ce câble optique 84.

La lumière qui est transmise au réseau de Bragg 78 par l'intermédiaire de ce coupleur et qui n'est pas réfléchie par ce réseau de Bragg 78 se propage dans le reste du câble optique 84.

On peut encore munir le capteur de la figure 3 d'un autre réseau de Bragg 84 de compensation de température. On place encore ce réseau de Bragg 86 dans une portion de la fibre optique 76 qui n'est pas soumise à la pression, par exemple dans l'un des deux embouts d'ancrage 80 et 82.

## Revendications

1. Capteur de pression comprenant un guide d'onde optique (10) et un premier élément réflecteur (14) formé dans une portion (12) de ce guide d'onde optique, cette portion étant soumise à la pression (P), ce capteur comprenant en outre des moyens (20) de maintien latéral de la portion de guide d'onde optique, en ce que cette portion du guide d'onde optique est soumise à une précontrainte en compression dont la valeur est faible devant l'étendue de mesure du capteur et en ce que le capteur comprend en outre un boîtier (2) et une membrane (4) qui est soumise à la pression et ferme ce boîtier, le capteur fonctionnant en compression, la portion (12) de guide d'onde optique étant placée dans le boîtier et comportant des première et deuxième extrémités, qui sont respectivement fixées à la membrane et au boîtier, et les moyens de maintien latéral comprennant des moyens (20) pour empêcher le flambage de la portion de guide d'onde optique lorsque cette dernière est comprimée, **caractérisé en ce que** les moyens (20) pour empêcher le flambage de la portion de guide d'onde optique comprennent un tube (22), qui est placé dans le boîtier, entoure cette portion de guide d'onde optique et comporte une première extrémité qui est espacée de la membrane et une deuxième extrémité qui est fixée au boîtier, et des bagues (24) qui s'étendent les unes à la suite des autres dans le tube, entre le boîtier et la membrane, sont espacées les unes des autres par des éléments élastiques (26) et sont traversées par la portion de guide d'onde optique, cette portion de guide d'onde optique étant apte à glisser librement dans ces bagues.

2. Capteur selon la revendication 1, dans lequel les éléments élastiques sont des entretoises toriques élastiques (26).

3. Capteur selon l'une quelconque des revendications 1 et 2, dans lequel les éléments élastiques (26) sont faits d'un matériau élastique à faible coefficient de frottement.

4. Capteur selon la revendication 3, dans lequel ce matériau élastique est le polytétrafluoréthylène alvéolé.

5. Capteur selon l'une quelconque des revendications 1 à 4, comprenant en outre un deuxième élément réflecteur (46) qui est différent du premier élément réflecteur (14) et qui est prévu pour une mesure de température, ce deuxième éléménet réflecteur étant formé dans une portion du guide d'onde optique (10) qui n'est pas soumise à la pression.

## Claims

1. Pressure sensor comprising an optical wave guide and a first reflecting element formed in a portion of this optical wave guide, this portion being submitted to pressure (P), this sensor comprising means of lateral support of the portion of optical wave guide, and in that this portion of optical wave guide is submitted to a compression prestress with a small value compared with the measurement range of the sensor, said sensor also comprising a housing and a membrane that is subjected to pressure and closes this housing, the sensor acting in compression, in which the portion of the optical wave guide is placed in the housing and comprises first and second ends that are fixed to the membrane and to the housing respectively, and the means of lateral support comprise means of preventing buckling of the portion of optical wave guide when the latter is compressed, **characterized in that** the means of preventing buckling of the portion of optical wave guide comprise a tube, which is placed in the housing, and surrounds this portion of optical wave guide and comprises a first end that is at a spacing from the membrane and a second end that is fixed to the housing, and rings which are arranged one after the other in the tube between the housing and the membrane, and are spaced from each other by elastic elements, the portion of optical wave guide passing through them, and this portion of optical wave guide being free to slide in these rings.

2. Sensor according to claim 1, in which the elastic elements are elastic toric spacers.

3. Sensor according to any one of claims 1 and 2, in which the elastic elements are made from an elastic material with a low coefficient of friction.

4. Sensor according to claim 3, in which this elastic material is cellular polytetrafluoroethylene.

5. Sensor according to any one of claims 1 to 4, also comprising a second reflecting element that is different from the first reflecting element and that is designed for measuring temperature, this second reflecting element being formed in a portion of the optical wave guide that is not subjected to pressure.

## Patentansprüche

1. Drucksensor mit einem Lichtwellenleiter (10) und einem in einem Teilstück (12) dieses Lichtwellenleiters ausgebildeten ersten Reflexionselement (14), wobei dieses Lichtwellenleiter-Teilstück dem Druck (P) ausgesetzt ist, dieser Sensor außerdem seitlichen Stützeinrichtungen (20) des Lichtwellenleiter-Teilstücks umfasst und dieses Lichtwellenleiter-Teilstück einer Vorspannung in Form eines Drucks ausgesetzt ist, dessen Wert niedrig ist in Relation zu dem Messbereich des Sensors, wobei der Sensor außerdem ein Gehäuse (2) und eine Membran (4) umfasst, die dem Druck ausgesetzt ist und dieses Gehäuse des mit Druck arbeitenden Sensors verschließt, das Lichtwellenleiter-Teilstück (12) sich in dem Gehäuse befindet und ein erstes und ein zweites Ende aufweist, die jeweils an der Membran und an dem Gehäuse befestigt sind, und die seitlichen Stützeinrichtungen Einrichtungen (20) umfassen, um das Ausknicken des Lichtwellenleiter-Teilstücks zu verhindern, wenn dieser letztere komprimiert bzw. gestaucht wird,
**dadurch gekennzeichnet, dass** die Einrichtungen (20) zur Verhinderung des Ausknickens des genannten Lichtwellenleiter-Teilstücks ein in dem Gehäuse angeordnetes Rohr (22) umfassen, das dieses Lichtwellenleiter-Teilstück umgibt und das ein erstes Ende umfasst, das von der Membran beabstandet ist, und ein zweites Ende, das an dem Gehäuse befestigt ist, und Ringe (24), die sich zwischen dem Gehäuse und der Membran aufeinanderfolgend in dem Rohr erstrecken, durch elastische Elemente (26) zueinander beabstandet sind und von dem Lichtwellenleiter-Teilstück durchquert werden, wobei dieses Lichtwellenleiter-Teilstück frei in diesen Ringen gleiten kann.

2. Sensor nach Anspruch 1, bei dem die elastischen Elemente elastische O-ringförmige Abstandshalter (26) sind.

3. Sensor nach einem der Ansprüche 1 und 2, bei dem die elastischen Elemente (26) aus einem elastischen Material mit einem niedrigen Reibungsbeiwert gefertigt sind.

4. Sensor nach Anspruch 3, bei dem dieses elastische Material Polytetrafluorethylen ist.

5. Sensor nach einem der Ansprüche 1 bis 4, der außerdem ein zweites Reflexionselement (46) umfasst, das sich von dem ersten Reflexionselement (14) unterscheidet und dazu dient, eine Temperatur zu messen, wobei dieses zweite Reflexionselement in einem Teilstück des Lichtwellenleiters (10) ausgebildet ist, das nicht dem Druck ausgesetzt ist.
